# EUROPÄISCHE PATENTANMELDUNG

(11) **EP 1 352 556 A2**
(43) Veröffentlichungstag der Anmeldung: **15.10.2003**
(21) Anmeldenummer: 03008502.1
(22) Anmeldetag: 11.04.2003
(51) Int. Cl.: A01J 5/04

(54) **Melkvorrichtung für Kühe**

(30) Priorität: 13.04.2002 DE 10216345
(71) Anmelder: Gauder, Rene, 4750 Bütgenbach (BE)
(72) Erfinder: Gauder, Rene, 4750 Bütgenbach (BE)
(74) Vertreter: Patentanwälte Hauck, Graalfs, Wehnert, Döring, Siemons, Schildberg

(57) **Zusammenfassung**

Melkvorrichtung für Kühe, insbesondere ein Melkmaschine, mit mehreren Zitzenbechern und einem Milchsammeistück, das über kurze Milchschläuche mit den Zitzenbechem und über einen langen Milchschlauch mit einem Milchabscheider verbunden ist, wobei der lange Milchschlauch in einem von dem Milchabscheider entfernt liegenden Abschnitt mit einem Lufteinlaß versehen ist.

## Beschreibung

Die Erfindung betrifft eine Melkvorrichtung für Kühe, insbesondere eine Melkmaschine oder einen Melkroboter.

Es ist üblich, zum Melken von Kühen Melkmaschinen einzusetzen. Die Melkmaschine besteht im wesentlichen aus Zitzenbechem mit Zitzengummis und einem Milchsammeistück, an dem kurze Milchschläuche von den Zitzenbechern zusammenlaufen. An das Milchsammelstück schließt sich ein langer Milchschlauch an, der die Milch an die Hauptmilchleitung weiterführt. Üblicherweise ist eine Hauptmilchleitung aus Edelstahl gefertigt und fest im Stall verlegt, während die Milchschläuche, sowohl die kurzen Milchschläuche als auch der lange Milchschlauch, aus Gummi oder Kunststoff hergestellt sind.

Beim Melkroboter fehlt im Gegensatz zu der Melkmaschine das Milchsammelstück. Hier werden die mit den Zitzenbechern verbundenen Milchschläuche direkt bis in den Milchabscheider geführt. Die Milchleitung endet am Milchabscheider.

Am Milchabscheider befindet sich eine Milchpumpe, die die Milch vom Milchabscheider zum Milchsammdtank leitet. Der Milchabscheider steht hierbei genau wie die übngen Teile unter Vakuum, so daß die Milchpumpe auch das Melkvakuum überwinden muß. In den Milchabscheider mündet auch die von der Vakuumpumpe kommende Vakuumleitung. Der Milchentzug kommt dadurch zustande, daß die Vakuumpumpe einen Unterdruck von 30 - 50 kPa erzeugt, der die Milch aus dem Euter saugt. Da ein Dauersog den Milchfluß zum Erliegen brächte, wird der Milchentzug durch die Arbeit des sogenannten Pulsators in einem bestimmten Rhythmus unterbrochen, beispielsweise indem der Pulsator 50 - 70 mal pro Minute das Zitzengummi öffnet und schließt. Hierdurch kommt es, ähnlich wie bei einem Saugen eines Kalbes zu einer periodischen Milchentnahme.

Das Vakuum ist die treibende Kraft für die Ableitung der Milch vom Euter. Ist diese Ableitung verzögert, treten die folgenden Probleme auf:

Es entstehen starke Vakuumschwankungen, so daß die dem Euter bereits entzogene Milch wieder zum Euter zurückfließt. Dadurch wird die Zitze mit Milch umspült und feucht. Ferner wird die Zitze krankmachenden Keimen ausgesetzt, beispielsweise indem Keime eines Euterviertels auf diese Weise zu einem anderen Euterviertel gelangen. Dieser Zusammenhang wird in Fachkreisen als "Crossflow" bezeichnet.

Die Milchleistung der Kühe ist sehr unterschiedlich, so geben beispielsweise manche Kühe lediglich 10 Liter Milch pro Tag, während Hochleistungskühe bis zu 70 Liter Milch pro Tag geben. Da die Dauer für den Milchentzug im wesentlich geringeren Maße schwankt als die Milchleistung, treten große Unterschiede in der ermolkenen Milchmenge pro Minute auf, dem sogenannten "Minutengemelk". Berücksichtigt man nun, daß das Minutengemelk während eines etwa 7 minütigen Melkens nicht konstant ist, sondern in der erste Minute am größten und nachfolgend bis zum Ende des Melkvorgangs abnimmt, so ergeben sich Werte für das Minutengemelk im Bereich zwischen 1 und 15 Litern pro Minute.

Bei einem hohen Milchfluß treten häufig teilweise erhebliche Vakuumschwankungen auf, die zu einem Unwohlbefinden der Kuh beim Melken sowie zur Belastung des Eutergewebes und damit letztendlich zu Eutererkrankungen führen.

Der vorliegenden Erfindung liegt die Aufgabe zugrunde, eine Melkvorrichtung für Kühe bereitzustellen, die mit einfachen Mitteln sicher und zuverlässig das Auftreten von einem Milchstau und Vakuumschwankungen vermeidet.

Die erfindungsgemäße Aufgabe wird durch eine Melkvorrichtung mit den Merkmalen aus den Ansprüchen 1 und 3 gelöst. Vortezlhafte Ausgestaltungen der Melkvorrichtungen sind Gegenstand der Unteransprüche.

Die erfindungsgemäße Melkvorrichtung besteht aus mehreren Zitzenbechem und einem Milchsammelstück. Das Milchsammeistück ist über kurze Milchschläuche mit den Zitzenbechem verbunden und über einen langen Milchschlauch mit einem Milchabscheider oder einer zu dem Milchabscheider führenden Melkleitung. Die Vorrichtung ist dadurch gekennzeichnet, daß der lange Milchschlauch in seinem vom Milchabscheider entfernt liegenden Bereich mit einem Lufteinlaß versehen ist. Der Lufteinlaß bewirkt, daß die Milch im langen Milchschlauch kontinuierlich ohne Wellen bei einem weitgehend konstanten Vakuum fließt. Wellenbewegungen der abgeleiteten Milch werden auf diese Weise vermieden. Durch den gleichmäßigen Lufteintritt können nicht länger Schwankungen im Vakuum auftreten, die sich verstärken. Das Vermeiden starker Schwankungen hat eine Reihe von Vorteilen. So verändern sich Melkdauer, Ausmelkgrad, Eutergesundheit und das Wohlbefinden der Kuh in erheblichem Maße. Die Melkdauer verkürzt sich, weil die Phasen mit sehr niedrigem Vakuum entfallen, so daß ein gleichmäßiger Milchentzug erfolgt. Die Eutergesundheit verbessert sich, weil die Phasen mit sehr hohem Vakuum entfallen. Hohes Vakuum belastet und schädigt das Eutergewebe bzw. die Zitze, ohne den Milchfluß zu erhöhen. Auch der Crossflow wird vermieden, da aufgrund fehlender Vakuumschwankungen die gemolkene Milch nicht länger von einem Eutervietel zum nächsten übertreten kann. Der Ausmelkgrad verbessert sich ebenfalls, da der zuvor beschziebene Melkstreß entfällt und somit weniger StreßhormQne freigesetzt werden, die das Ausmelken direkt negativ beeinflussen.

In einer bevorzugten Ausgestaltung ist auch das Milchsammelstück mit einem Lufteinlaß versehen. Während bei bekannten Melkvorrichtungen das Vakuum im Milchsammeistück in einem Bereich von +2 bis -13 kPa schwankt, liegt die Schwankung bei einem Lufteinlaß im Milchsammeistück und einem Lufteinlaß in dem Milchschlauch im Bereich von 4 bis 6 kPa unter dem Betriebsvakuum. Durch den Lufteinlaß im Milchschlauch entsteht ein weitgehend konstantes Vakuum am Ausgang des Milchsammeistücks. Durch den dortigen Lufteintritt entsteht in dem Milchsammeistück ein gleichmäßiger Luftstrom, mit der Folge, daß starke Schwankungen im Vakuum vermieden werden.

Die arfindunasgemäße Aufgabe wird ebenfalls durch eine Melkvorrichtung für Kühe gelöst, die nach Art eines Melkroboters ohne ein Milchsammelstüek ausgebildet ist. Diese Meikvorriehtung besitzt ebenfalls mehrere Zitzenbecher und einen Milchabscheider. Der Milchabscheider ist über einen langen Milchschlauch mit den Zitzenbechern verbunden. Auch bei der direkten Verbindung der Zitzenbecher mit dem Milchabscheider, die möglicherweise noch über eine Melkleitung erfolgen kann, wird erfindungsgemäß der Milchschlauch an seinem von dem Milchabscheider entfernt liegenden Ende mit einem Lufteinlaß versehen. Auch hier bewirkt der Lufteinlaß, daß gerade bei einem großen Minutengemelk Schwankungen im Vakuum vermieden werden und somit ein gleichmäßiger Milchstrom vorliegt.

Bevorzugt ist der Lufteinlaß in dem langen Milchschlauch in einem Abschnitt vorgesehen, der im wesentlichen horizontal geführt ist. Bei einer Melkmaschine ist dies beispielsweise der sich an das Milchsamjnelstück anschließende Abschnitt.

In einer bevorzugten Ausgestaltung ist der Lufteinlaß in dem Milchschlauch als eine Öffnung in der Schlauchwand vorgesehen, die mit einem verstellbaren Ventil geöffnet und geschlossen werden kann. Das Ventil stellt bevorzugt den Durchmesser der Öffnung in der Schlauchwand ein, wobei das Ventil beispielsweise als ein Drehventil oder ein Schiebeventil ausgebildet sein kann, das in einer ersten Stellung die Öffnung. der Schlauchwand verschließt und in einer zweiten Stellung die Öffnung in der Schlauchwand freigibt. Bevorzugt ist das Ventil mit einer Skaleneinteilung versehen, die den Grad der Öfmung des Lufteinlasses anzeigt. In einer alternativen Ausgestaltung kann eine Ventilsteuerung vorgesehen sein, die abhängig von einem erfaßten Milchfluß das Ventil stellt. Sensoren zum Erfassen des Milchflusses sind regelmäßig bei Melkrobotem vorgesehen, können aber auch bei Melkmaschinen eingesetzt werden. Das Ventil zum Anpassen des Lufteintritts im langen Milchschlauch ermöglicht es, die eintretende Luftmasse an das Minutengemelk anzupassen. Bei einem großen Minutengemell; ist es erforderlich, daß mehr Luft eintritt als bei einem kleinen Minutengemelk Andererseits kann bei einem niedrigen Minutengemelk auf eine große Luftzufuhr verzichtet werden, um das Betriebsvakuum nicht unnötig stark zu senken.

Die erfindungsgemäße Melkvorrichtung wird anhand eines nachfolgenden Beispiels näher erläutert. Es zeigt:
- Fig. 1:: eine schematische Ansicht einer Rohrmelkanlage,
- Fig. 2:: eine vergrößerte Ansicht eines Milchsammelstacks mit zwei Zitzenbechern und
- Fig. 3:: eine vergrößerte Ansicht des Milchsammelsiücks mit einem Rohreinsatz an dem Lufteinlaß.

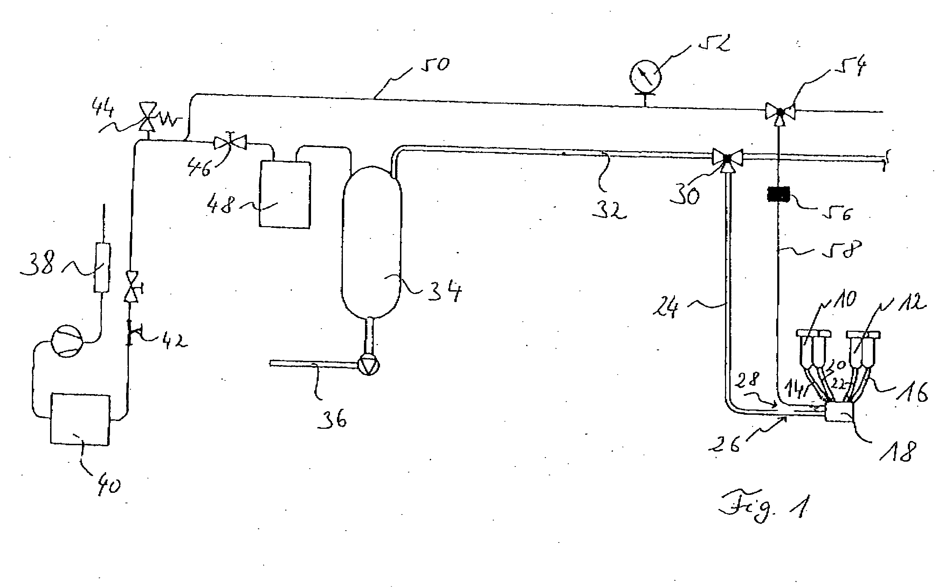

Fig. 1 zeigt eine Rohrmelkanlage, von der zwei Zitzenbecher 10, 12 dargestellt sind. Die Zitzenbecher 10 und 12 sind über kurze Milchschläuche 14 und 16 mit einem Milchsanunelstück 18 verbunden. Über die kurzen Milchschläuche 14 und 16 fließt die abgesaugte Milch zu dem Milchsammeistück. Zusätzlich zu den kurzen Milchschläuchen 14 und 16 besitzen die Zitzenbecher 10 und 12 Pulsschläuche 20 und 22.

Das Milchsammeistück mündet in einem langen Milchschlauch 24, der in Fig. 1 einen horizontal geführten Abschnitt 26 besitzt. Der Abschnitt 26 ist mit einem Lufteinlaß 28 versehen. Der lange Milchschlauch 24 mündet über einen Milchhahn 30 in eine Melkleitung 32. Die Melkleitung 32 besteht aus Edelstahl und, ist beispielsweise fest in dem Stall montiert. Über weitere, nicht dargestellte, Milchhähne können jeweils Milchschläuche für eine Vielzahl von Kühen angeschlossen werden. Über die Melkleitung 32 gelangt die Milch in den Milchabscheider 34, von wo sie über eine Pumpen-Milchschleuse über eine Milchdruckleitung' 36 weitergeleitet wird. Das zum Melken erforderliche Vakuum wird über eine Vakuumpumpe 38 erzeugt. Die Vakuumpumpe erzeugt einen Unterdruck von ungefähr 30 - 50 kPa, mit dem die Milch aus dem Euter gesaugt wird. An die Milchpumpe schließen sich ein Vakuumtank 40 und entsprechende Prüfanschlüsse 42 an. Nachfolgend an ein Vakuumventil 44 teilt sich die Vakuumleitung. Ein Zweig der Vakuumleitung läuft über ein Absperrorgan 46 zu einem Sicherheitsabscheider 38, der mit dem Milchabscheider verbunden ist. Der an dem Milchabscheider anliegende Unterdruck saugt die Milch über die Zitzenbecher und den langen Milchschlauch in die Melkleitung, von wo aus sie zu dem Milchabscheider gelangt.

Der zweite Ast der Luftleitung wird zur Erzeugung der pulsierenden Melkbewegung in dem Zitzenbecher eingesetzt. Die Luftleitung 50 ist mit einem Vakuummeter 52 versehen, das eine Kontrolle des Unterdrucks zuläßt. Über einen Luftanschluß 54 ist die Luftleitung 50 mit einem Pulsator 56 verbunden, der einen Puls von ungefähr 50 - 70 Schläge pro Minute vorgibt. Die gepulste Druckluft gelangt über den langen Pulsschlauch zu den kurzen Pulsschläuchen 20, 22, von wo aus sie das Zitzengummi auseinander saugen.

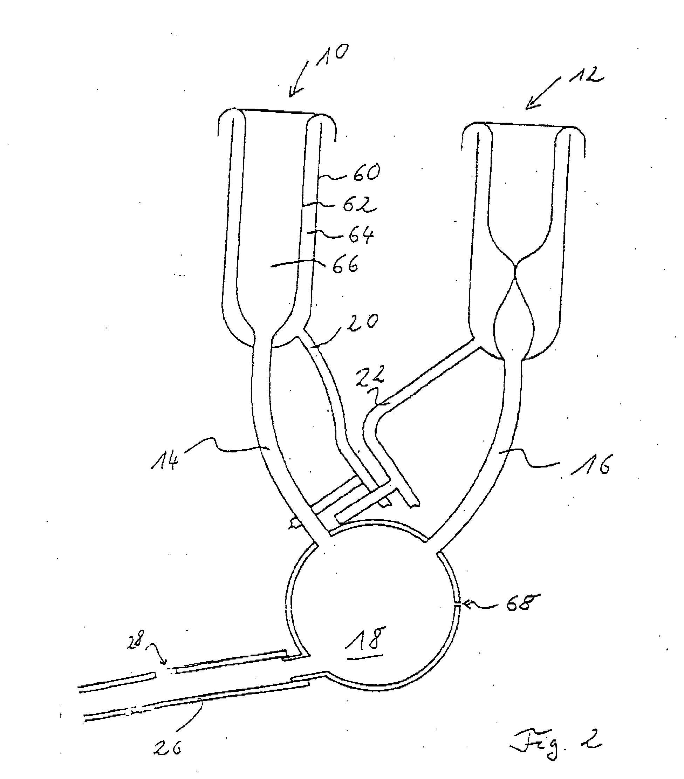

Fig. 2 zeigt zwei Zitzenbecher näher. Gleiche Elemente in Fig. I und 2 sind mit gleichen Bezugszeichen versehen. Fig. 2 zeigt schematisch den Aufbau der Zitzenbecher zum besseren Verständnis der Erfindung. Der Zitzenbecher besteht aus einer außenliegenden Zitzengummihülse 60, in der das Zitzengummi 62 angeordnet ist. Zwischen Zitzengummihülse und Zitzengummi ist der Pulsraum 64 vorgesehen. Der Zitzenbecher 10 ist in der Saugphase dargestellt, in der über den kurzen Pulsschlauch 20 ein Unterdruck anliegt. Der Unterdrück sorgt dafür, daß der Zitzengummi-Innenraum 66 sich vergrößert und Milch über die kurze Milchleitung 14 in das Milchsammelstück 18 abfließt. In Fig. 2 ist der Zitzenbecher 12 in seiner Entlastungsphase dargestellt, in der über den kurzen Pulsschlauch 22 ein geringerer Unterdruck in dem Pulsraum vorliegt und das Zitzengummi sich zusammenzieht.

Das Milchsammelstück 18 ist mit einem Lufteinlaß 68 versehen. Durch den Lufteinlaß 68 fließt ständig eine gewisse Menge an Luft in das Milchsanunelstück ein. Der Lufteinlaß 61 am Milchsammeistück führt jedoch nur bedingt zu einer konstanten Luftzufuhr. Beim geringen Minutengemelk wird im Verhältnis zur Luftmenge relativ viel Luft in die milchführenden Teile angesaugt, so daß die Milch problemlos über die Melkleitung 32 abfließt. Bei hohen Minutenleistungen dagegen kommt es unabhängig davon, ob das Milchsammelstück oder eventuell auch der kurze Milchschlauch belüftet wird aufgrund des Milchftusses zu einem Milchstau im Milchsammelstück. Sobald zwischen der Vakuumpumpe und dem Lufteinlaß 68 jedoch keine direkte Luftverbindung mehr besteht, treten in Abhängigkeit von der Milchmenge teilweise erhebliche Vakuumschwankungen auf, so daß bei Rohrmelkanlagen Vakuumschwankungen von +2 bis -13kPa bei einem Betriebsvakuum von 42kPa gemessen werden konnten. Dies belastet die Kuh. Weder eine Erhöhung der Lüftungsrate im kurzen Milchschlauch noch im Milchsammeistück kann dieses Problem beheben, denn je mehr Luft in das Milchsammelstück gelangt, desto stärker tritt eine Verwirbelung der angesaugten Milch in dem Milchsammelstück auf, so daß ebenfalls der Milchabfluß zeitweise unterbrochen bzw. gebremst wird. Die Vakuumschwankungen werden bei einer Vergrößerung des Lufteinlasses 68 nur verstärkt und erhöht.

Erst der Lufteinlaß 28 in der langen Milchleitung 26 sorgt dafür, daß die Milch ohne große Vakuumschwankungen in den Milchabscheider 34 gelangt.

Für eine gleichmäßige Melkleistung hat sich als besonders vorteilhaft herausgestellt, daß ein in seinem Durchmesser veränderbarer Lufteinlaß 28, der abhängig von der Milchleistung des Tieres, also vom Minutengeinelk, oder abhängig vom tatsächlichen Vakuum am Ausgang des Milchsamrnelstüeks oder in Abhängigkeit vom Milchfluß gestellt wird. Der im Durchlaß veränderbare Lufteinlaß kann dadurch erreicht werden, daß sich am Milchsammelstück ein Drehknopf befindet. Durch manuelle Bedienung des Drehknopfs wird der Lufteinlaß 28 im Schlauch 26 verändert. Die Veränderung erfolgt jeweils von Hand, wenn ein neues Tier den Melkstand betritt, da die Milchleistung bzw. das Minutengemelk der Kuh dem Melker bekannt ist. Denkbar ist beispielsweise hier eine Skaleneinteilung 1 bis 4, wobei 4 für den maximalen Lufteintritt steht und speziell für Hochleistungskühe vorgesehen ist. Alternativ kann auch ein automatisches Regelventil an dem Milchsammeistück vorgesehen sein, welches in Abhängigkeit von dem Vakuum am Ausgangs des Milchsamrnelstücks den Lufteinlaß verändert.

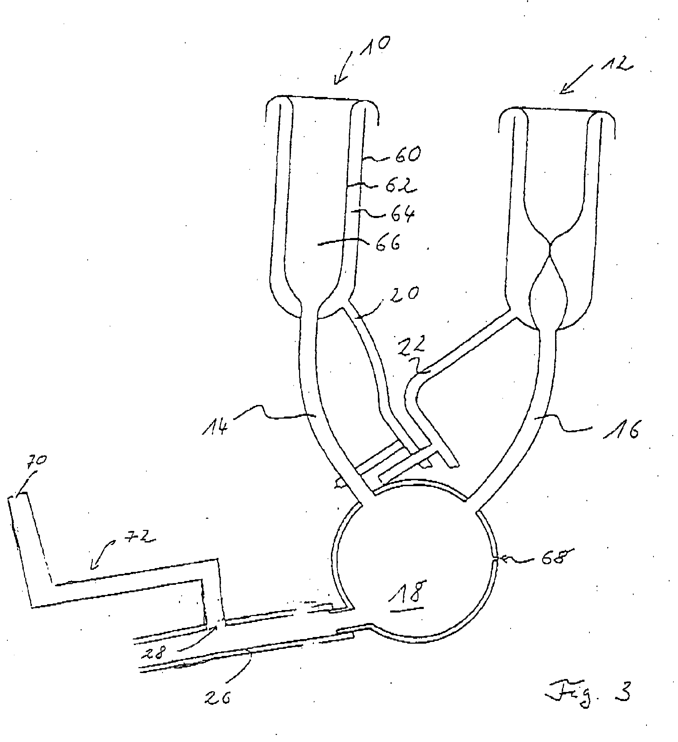

Fig. 3 zeigt ein Milchsammelstück 18 mit Bezug auf Fig. 2, Der Lufteinlaß 28 ist mit einem Röhrchen 72 verbunden. Während die lange Milchleitung 26 einen Innendurchmesser von 12 bis 19 mm besitzt, ist der Durchmesser des Röhrchens 72 mit 3 bis 4 mm deutlich kleiner. Das Röhrchen 72 kann an seinem Ende mit einer einfachen Lufteinlaßöfmung oder mit einer verstellbaren Lufteinlaßöffinmg 70 versehen sein. Das Röhrchen 72 schafft die Möglichkeit, Luft nicht aus der unmittelbaren Umgebung des Milchsammelstucks in der Milchleitung mifcsuführen. Das Röhrchen kann aus unterschiedlichen Materialien hergestellt und starr und/oder flexibel ausgebildet sein. Auch können mehrere unterschiedliche Rohrabschnitte hintereinandergesetzt werden.

## Patentansprüche

1. Melkvorrichtung für Kühe, insbesondere ein Melkmaschine, mit mehreren Zitzenbechem und einem Milchsammelstück (18), das über kurze Milchschläuche (14, 16) mit den Zitzenbechem (10, 12) und über einen langen Milchschlauch (24) mit einem Milchabscheider (34) verbunden ist, **dadurch gekennzeichnet, daß** der lange Milchschlauch (24) in einem von dem Milchabscheider (34) entfernt liegenden Abschnitt (26) mit einem Lufteinlaß (28) versehen ist.

2. Melkvorrichtung nach Anspruch 1, **dadurch gekennzeichnet, daß** das Milchsammelstück (18) mit einem LuReizalaß (68) versehen ist.

3. Melkvorrichtung für Kühe, insbesondere ein Melkroboter, mit mehreren Zitzenbechem (10, 12) und einem Milchabscheider (34), der über einen langen Milchschlauch (24) mit den Zitzenbechem (10, 12) verbunden ist, **dadurch gekennzeichnet, daß** der lange Milchschlauch (24) an seinem von dem Milchabscheider (34) entfernt liegenden Abschnitt (26) mit einem verstellbaren Lufteinlaß (28) versehen ist.

4. Melkvorrichtung Anspruch 1 bis 3, **dadurch gekennzeichnet, daß** der lange Milchschlauch (24) in dem vom Milchabschnitt entfernt liegenden Abschnitt (26) im wesentlichen horizontal geführt ist.

5. Melkvorrichtung nach einem der Ansprüche 1 bis 4, **dadurch gekennzeichnet, daß** der verstellbare Lufteinlaß in dem langen Milchschlaach (24) eine Öffnung (28) in der Schlauchwand aufweist, die über ein verstellbares Ventil geöffnet und geschlossen werden kann.

6. Melkvorrichtung nach Anspruch 5, **dadurch gekennzeichnet, daß** das Ventil den Durchmesser der Öffnung einstellt.

7. Melkvorrichtung nach Anspruch 6, **dadurch gekennzeichnet, daß** das Ventil mit einem Drehknopf ausgebildet ist, der in einer ersten Stellung den Lufteinlaß (28) verschließt und in einer zweiten Stellung den Lufteinlaß (28) freigibt.

8. Melkvorrichtung nach Anspruch 7, **dadurch gekennzeichnet, daß** das Ventil mit einen Skaleneinteilung versehen ist, die den Grad der Öffnung des Lufteinlasses (28) anzeigt.

9. Melkvorrichtung nach Anspruch 7, **dadurch gekennzeichnet, daß** eine Ventilsteuerung vorgesehen ist, die abhängig von einem gemessenem Milchfluß in der Milchleitung des Ventil stellt.

10. Melkvorrichtung nach einem der Ansprüche 1 bis 9, **dadurch gekennzeichnet, daß** der Lufteinlaß (28) mit einem Röhrenelement (72) versehen ist, das an seinem Ende einen einfachen oder verstellbaren Lufteinlaß (70) aufweist.
